# EUROPÄISCHE PATENTANMELDUNG

(11) **EP 1 693 299 A1**
(43) Veröffentlichungstag der Anmeldung: **23.08.2006**
(21) Anmeldenummer: 05026542.0
(22) Anmeldetag: 06.12.2005
(51) Int. Cl.: B65B 35/38, B65B 9/04, B65G 47/91

(54) **Vorrichtung für den Transfer von geordnet herangeförderten Produkten in die Näpfe eines Folienbandes**

(30) Priorität: 17.02.2005 DE 102005007532
(71) Anmelder: UHLMANN PAC-SYSTEME GmbH & Co. KG, 88471 Laupheim (DE)
(72) Erfinder: Matzenmüller, Jürgen, 88416 Bellamont (DE)
(74) Vertreter: Hentrich, Swen

(57) **Zusammenfassung**

Die Erfindung betrifft eine Vorrichtung für den Transfer von geordnet, in Aufnahmen (2) einer Platte (3) herangeförderten Produkten (4) wie Tabletten, Dragees, Kapseln oder dergl. in die Näpfe (5) eines kontinuierlich bewegten Folienbandes (6), wobei ein um eine erste Schwenkachse (7) verschwenkbarer Sauger (8) an dem freien Ende eines um eine zweite Schwenkachse (9) verschwenkbaren Schwenkarms (10) angeordnet ist, der auf einem nicht-parallel zur Transportrichtung (22) des Folienbandes (6) verstellbaren Schlitten (11) angeordnet ist.

## Beschreibung

Die Erfindung betrifft eine Vorrichtung für den Transfer von geordnet, insbesondere in Aufnahmen einer Platte herangeförderten Produkten wie Tabletten, Dragees, Kapseln oder dergleichen in die Näpfe eines Folienbandes, insbesondere eines kontinuierlich bewegten Folienbandes.

Eine derartige Vorrichtung ist aus der DE 199 26 893 A1 bekannt, die sich in der Praxis gut bewährt hat, allerdings aufgrund ihrer Konstruktion getaktet zu betreiben ist und damit nicht mit einem kontinuierlich bewegten Folienband zusammen wirken kann.

Der Erfindung liegt daher die Aufgabe zugrunde, eine Vorrichtung der eingangs genannten Art so auszubilden, daß in Platten einsortierte Produkte in die Näpfe eines kontinuierlich laufenden Folienbandes transferiert werden können, wobei eine Variabilität der Synchronbewegung der Vorrichtung mit dem Folienband gegeben sein muß, um verschiedene Formate übergeben zu können.

Diese Aufgabe wird nach der Erfindung bei einer Vorrichtung der eingangs genannten Art dadurch gelöst, daß ein um eine erste Schwenkachse verschwenkbarer Sauger an dem freien Ende eines um eine zweite Schwenkachse verschwnkbaren Schwenkarms angeordnet ist, der auf einem nicht-parallel zur Transportrichtung des Folienbandes verstellbaren Schlitten angeordnet ist.

Mit einer derartigen Vorrichtung ist der Vorteil verbunden, daß der Synchronbereich, in dem der Sauger parallel zum Folienband bewegt werden kann, eine den sich aus der Praxis ergebenden Anforderungen genügende Ausdehnung hat.

Besonders bevorzugt ist es dabei, wenn der Schlitten senkrecht zur Transportrichtung des Folienbandes auf einer Schlittenführung verstellbar ist, da dies zur Vergrößerung des Synchronbereiches bei Ausführung einer Schwenkbewegung besonders effektiv ist.

Weiterhin bevorzugt ist es, wenn auf der zweiten Schwenkachse eine Kurvenscheibe angeordnet ist, die zur Ableitung der translatorischen Verstellung des Schlittens aus der Schwenkbewegung der zweiten Schwenkachse der Schlittenführung anliegt. Diese Ausführungsform zeichnet sich insbesondere hinsichtlich der Einfachheit ihres Aufbaus aus, bei der für die Schwenkbewegung der zweiten Schwenkachse und der translatorischen Verstellung des Schlittens lediglich ein Antrieb erforderlich ist.

Dabei ist dann im Rahmen der Erfindung vorgesehen, daß die Schlittenführung zwei beabstandete Streben umfasst, zwischen denen die zweite Schwenkachse angeordnet ist, und daß auf den beiden Streben Laufrollen gelagert sind, die der Kurvenscheibe anliegen, so daß eine sichere Kraftübertragung zwischen der Kurvenscheibe und dem Schlitten gewährleistet ist und damit die erforderliche Betriebssicherheit erzielt werden kann.

Möglich ist es weiterhin im Rahmen der Erfindung, daß die zweite Schwenkachse mit der ersten Schwenkachse antriebsmäßig gekoppelt ist, wozu vorzugsweise auf der zweiten Schwenkachse und der ersten Schwenkachse jeweils eine Riemenscheibe angeordnet ist, die mittels eines Antriebsriemens miteinander gekoppelt sind. Der besondere Vorteil dieser Ausführungsform ist wiederum die Reduktion der zum Betrieb der Vorrichtung erforderlichen Antriebsaggregate.

Alternativ besteht selbstverständlich die Möglichkeit, daß für die Bewegungen der ersten Schwenkachse, der zweiten Schwenkachse sowie des Schlittens autarke Antriebe vorgesehen sind. Bei dieser Ausführungsform steigt zwar die Komplexität der Vorrichtung, dafür ist aber die Möglichkeit gegeben, die Bewegungen unabhängig voneinander auszuführen und zu steuern.

Um sämtliche mit einer Platte herangeförderten Produkte in einfacher Weise zugleich transferieren zu können, ist es günstig, wenn der Sauger als Saugerplatte gestaltet ist. Vorgesehen ist weiterhin, daß der Sauger gegenüber dem Schwenkarm höhenverstellbar gelagert ist, so daß die Produkte gezielt von der Platte entnommen und in das Folienband abgelegt werden können. Dazu ist der Sauger mittels eines druckmittelbetätigten Zylinders koaxial zur ersten Schwenkachse höhenverstellbar.

Im folgenden wird die Erfindung an einem in der Zeichnung dargestellten Ausführungsbeispiel näher erläutert; es zeigen:
- Fig. 1: eine perspektivische Darstellung der erfindungsgemäßen Vorrichtung, teilweise gebrochen dargestellt,
- Fig. 2: eine Vorrichtung gemäß der Fig. 1, dargestellt ohne die Verkleidung sowie ohne Saugerplatte und Vakuumanschluß,
- Fig. 3: das Detail III aus Fig. 2, dargestellt ohne den Schwenkantrieb,
- Fig. 4: eine Draufsicht auf eine schematische Darstellung der mit den Produkten bestückten Platten sowie des senkrecht zur Transportrichtung der Platten kontinuierlich bewegten Folienbandes, und
- Fig. 5: in der Teildarstellung A den vergrößerten Synchronbereich bei einer erfindungsgemäßen Vorrichtung im Vergleich mit dem in Teildarstellung B dargestellten Synchronbereich bei Ausnutzung einer reinen Schwenkbewegung zum Transfer der Produkte aus den Platten in das Folienband.

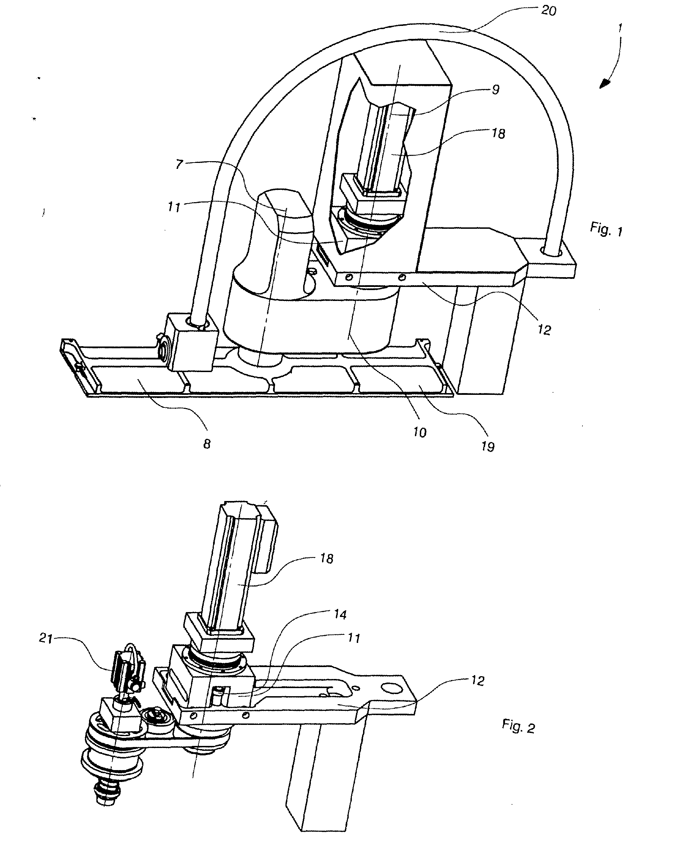

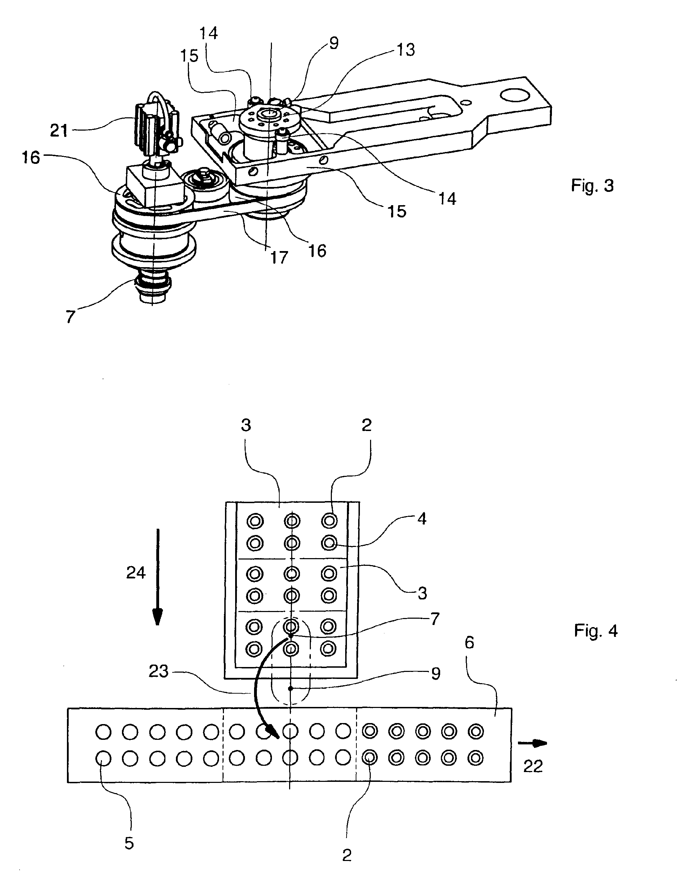

Die in der Zeichnung in Fig. 1 dargestellte Vorrichtung 1 wird verwendet, um die gemäß Fig. 4 in Aufnahmen 2 einer Platte 3 geordnet und getaktet herangeförderten (Pfeil 24) Produkte 4 wie Tabletten, Dragees, Kapseln oder dergleichen in die Näpfe 5 eines senkrecht zur Förderrichtung der Platten 3 kontinuierlich bewegten Folienbandes 6 zur transferieren (Pfeil 23). Dazu weist die Vorrichtung 1 einen um eine erste Schwenkachse 7 verschwenkbaren Sauger 8 auf, der an dem freien Ende eines um eine zweite Schwenkachse 9 verschwenkbaren Schwenkarms 10 angeordnet ist. Dieser Schwenkarm 10 ist auf einem Schlitten 11 angeordnet, der senkrecht zur Transportrichtung 22 des Folienbandes 6 auf einer Schlittenführung 12 verstellbar ist.

Insbesondere aus Fig. 3 ist dabei ersichtlich, daß auf der zweiten Schwenkachse 9 eine Kurvenscheibe 13 angeordnet ist, die zur Ableitung der translatorischen Verstellung des Schlittens 11 aus der Schwenkbewegung der zweiten Schwenkachse 9 der Schlittenführung 12 anliegt, nämlich an zwei Laufrollen 14, die auf zwei die Schlittenführung 12 bildenden Streben 15 angeordnet sind, zwischen denen sich die zweite Schwenkachse 9 befindet.

Die Figuren 2 und 3 lassen auch erkennen, daß die zweite Schwenkachse 9 mit der ersten Schwenkachse 7 antriebsmäßig gekoppelt ist, nämlich indem auf der zweiten Schwenkachse 9 und der ersten Schwenkachse 7 jeweils eine Riemenscheibe 16 angeordnet ist, die mittels eines Antriebsriemens 17 miteinander gekoppelt sind, so daß der der zweiten Schwenkachse 9 zugeordnete Schwenkantrieb 18 genutzt wird, um sowohl die Schwenkbewegungen der ersten Schwenkachse 7 und der zweiten Schwenkachse 9 als auch die translatorische Verstellung des Schlittens 11 zu bewirken. Selbstverständlich ist im Rahmen der Erfindung auch möglich, daß für die Bewegung der ersten Schwenkachse 7, der zweiten Schwenkachse 9 sowie des Schlittens 11 autarke Antriebe genutzt werden.

Die Fig. 1 zeigt, daß der Sauger 8 als Saugerplatte 19 gestaltet ist, um in einfacher weise sämtliche in einer Platte 3 herangeförderten Produkte 4 aufnehmen zu können. Die Saugerplatte 19 steht über eine Unterdruckleitung 20 mit einer Unterdruckquelle in Verbindung. Die Saugerplatte 19 ist an die Platte 3 angepasst und kann bei Formatwechsel entsprechend gewechselt werden.

Der Sauger 8, also die Saugerplatte 19, ist gegenüber dem ersten Schwenkarm 7 höhenverstellbar gelagert, wobei zur Höhenverstellung des Saugers 8 bei dem in der Zeichung dargestellten Ausführungsbeispiel ein Pneumatikzylinder 21 Anwendung findet, prinzipiell aber auch andere Antriebsmittel eingesetzt werden können.

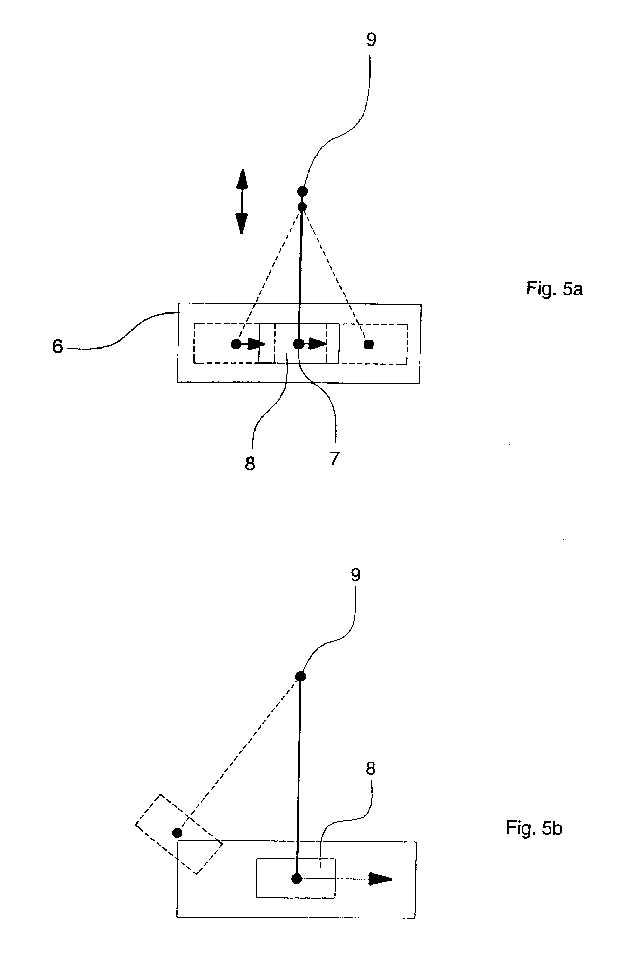

Fig. 5 lässt erkennen, daß bei Verwendung nur einer Schwenkachse nur genau eine Position des Saugers 8 die erforderliche Parallelität und Synchronizität mit dem Folienband 6 zeigt; bei der Erfindung ist der Synchronbereich deutlich vergrößert.

## Patentansprüche

1. Vorrichtung für den Transfer von geordnet, insbesondere in Aufnahmen (2) einer Platte (3) herangeförderten Produkten (4) wie Tabletten, Dragees, Kapseln oder dergl. in die Näpfe (5) eines Folienbandes (6), insbesondere eines kontinuierlich bewegten Folienbandes (6), **dadurch gekennzeichnet, daß** ein um eine erste Schwenkachse (7) verschwenkbarer Sauger (8) an dem freien Ende eines um eine zweite Schwenkachse (9) verschwenkbaren Schwenkarms (10) angeordnet ist, der auf einem nicht-parallel zur Transportrichtung (22) des Folienbandes (6) verstellbaren Schlitten (11) angeordnet ist.

2. Vorrichtung nach Anspruch 1, **dadurch gekennzeichnet, daß** der Schlitten (11) senkrecht zur Transportrichtung (22) des Folienbandes (6) auf einer Schlittenführung (12) verstellbar ist.

3. Vorrichtung nach Anspruch 2, **dadurch gekennzeichnet, daß** auf der zweiten Schwenkachse (9) eine Kurvenscheibe (13) angeordnet ist, die zur Ableitung der translatorischen Verstellung des Schlittens (11) aus der Schwenkbewegung der zweiten Schwenkachse (9) der Schlittenführung (12) anliegt.

4. Vorrichtung nach Anspruch 3, **dadurch gekennzeichnet, daß** die Schlittenführung (12) zwei beabstandete Streben (15) umfaßt, zwischen denen die zweite Schwenkachse (9) angeordnet ist, und daß auf den beiden Streben (15) Laufrollen (14) gelagert sind, die der Kurvenscheibe (13) anliegen.

5. Vorrichtung nach einem der Ansprüche 1 bis 4, **dadurch gekennzeichnet, daß** die zweite Schwenkachse (9) mit der ersten Schwenkachse (7) antriebsmäßig gekoppelt ist.

6. Vorrichtung nach Anspruch 5, **dadurch gekennzeichnet, daß** auf der zweiten Schwenkachse (9) und der ersten Schwenkachse (7) jeweils eine Riemenscheibe (16) angeordnet ist, die mittels eines Antriebsriemens (17) miteinander gekoppelt sind.

7. Vorrichtung nach Anspruch 1, **dadurch gekennzeichnet, daß** für die Bewegungen der ersten Schwenkachse (7), der zweiten Schwenkachse (9) sowie des Schlittens (11) autarke Antriebe vorgesehen sind.

8. Vorrichtung nach einem der Ansprüche 1 bis 7, **dadurch gekennzeichnet, daß** der Sauger (8) als Saugerplatte (19) gestaltet ist.

9. Vorrichtung nach einem der Ansprüche 1 bis 8, **dadurch gekennzeichnet, daß** der Sauger (8) gegenüber dem Schwenkarm (10) höhenverstellbar gelagert ist.

10. Vorrichtung nach Anspruch 9, **dadurch gekennzeichnet, daß** der Sauger (8) mittels eines druckmittelbetätigten Zylinders (21) koaxial zur ersten Schwenkachse (7) höhenverstellbar ist.
